# EUROPEAN PATENT APPLICATION

(11) **EP 4 810 543 A1**
(43) Date of publication of application: **23.09.2026**
(21) Application number: 24891170.3
(22) Date of filing: 22.10.2024
(51) Int. Cl.: C08J 3/03, C08G 18/00, C08G 18/67, C09D 11/30

(54) **METHOD FOR PRODUCING RESIN DISPERSION LIQUID**

(30) Priority: 13.11.2023 JP 2023193089
(71) Applicant: Mitsubishi Chemical Corporation, Tokyo 100-8251 (JP)
(72) Inventor: KASAI, Kengo, Tokyo 100-8251 (JP); SAKATANI, Shuuhei, Tokyo 100-8251 (JP); TAMAI, Teruko, Tokyo 100-8251 (JP); NAKAGAWA, Tomoko, Tokyo 100-8251 (JP)
(74) Representative: Hoffmann Eitle
(86) International application number: PCT/JP2024/037551
(87) International publication number: WO 2025/105129

(57) **Abstract**

A method for producing a resin dispersion liquid containing at least water and a water-insoluble resin, the method including steps [b] and [c] described below, wherein a mixture obtained after completion of step [b] has a viscosity of 4.0 × 10⁵ mPa·s or less, and a content ratio (mass ratio) of water to the water-insoluble resin in the mixture is 2.0 or less: step [b]: a first addition step of adding and mixing water with the water-insoluble resin which is in a liquid state at 73°C or lower under atmospheric pressure; and step [c]: a second addition step of adding and mixing water with a mixture obtained in step [b].

## Description

### Technical Field

The present invention relates to a method for producing a resin dispersion liquid.

### Background Art

In recent years, demand for inks, particularly inks for inkjet printers, has been increasing. Inkjet printers provide merits such as ease of full color printing, less noise, the ability to obtain high-resolution images at a low cost, the ability to achieve high-speed printing, the ability to print on a curved surface as well as a flat surface, and the ability to easily print on a large surface area. Accordingly, inkjet printers are rapidly becoming widespread not only for personal use, but also as commercial inkjet printers for sign applications, window films, posters, car wrapping, wallpapers, and the like.

In the related art, inks for printing with commercial inkjet printers include aqueous inks in which a pigment is dispersed or dissolved in an aqueous medium; solvent inks in which a pigment is dispersed or dissolved in an organic solvent medium; and solvent-free UV inks in which a pigment is dispersed in an ultraviolet-curable monomer without using a solvent.

Among these, aqueous inks have high environmental compatibility; however, as compared with solvent inks and solvent-free UV inks, the resulting coating film may have insufficient water resistance, solvent resistance, and hardness.

As a solution to the above problems in aqueous inks, latex inks are known in which a water-insoluble or poorly soluble binder resin is dispersed in particulate form in an aqueous medium. Latex inks are superior in coating-film hardness and the like compared with inks in which the binder resin is dissolved in water. Meanwhile, in order to uniformly disperse a resin that is inherently water-insoluble or poorly soluble in water, latex inks generally require an additive such as an organic solvent or a surfactant, or a special stirring method.

Patent Literatures 1 and 2 disclose methods in which a resin is dispersed using an organic solvent and the organic solvent is removed by distillation under reduced pressure to produce a dispersion liquid of resin particles. However, this method discharges an organic solvent, raising concerns regarding environmental compatibility.

Patent Literature 3 discloses a method for producing an aqueous emulsion under a temperature condition exceeding 100°C by applying pressure. However, stirring and mixing at a temperature exceeding 100°C, which is the boiling point of water under normal pressure, require equipment capable of withstanding high pressure, and there are also concerns regarding safety during production.

Patent Literature 4 discloses a method in which urethane acrylate and polypentaerythritol polyacrylate are mixed together with a photoradical polymerization initiator at 80°C, and water is added at 50°C. In this method, an emulsion can be produced without using an organic solvent or a surfactant and under mild conditions at atmospheric pressure in which water does not boil. However, in Patent Literature 4, the physical properties of a substance formed during production of the dispersion liquid and the specific procedures of the dispersion process are not clear. In addition, Patent Literature 4 does not describe whether water is added all at once or in divided portions.

### Citation List

### Patent Literature

Patent Literature 1: JP 2022-150039 A
Patent Literature 2: JP 2022-150040 A
Patent Literature 3: JP 2008-106262 A
Patent Literature 4: JP 2013-199602 A

### Summary of Invention

### Technical Problem

An object of the present invention is to provide a method for producing a resin dispersion liquid by dispersing a water-insoluble resin in water, the method being capable of producing, under mild conditions, a resin dispersion liquid suitable as a raw material for inkjet inks and having a small amount of coarse particles.

### Solution to Problem

The present inventors have found that a resin dispersion liquid having a small amount of coarse particles can be produced under mild conditions by a method including a step of adding water to a water-insoluble resin in a molten liquid state at or below a specific temperature and mixing them, wherein this water addition and mixing step is repeated two or more times, the viscosity of the system after completion of the first water addition and mixing step is adjusted to a specific value or less, and the content ratio (mass ratio) of water to the water-insoluble resin in the system is adjusted to a specific value or less.

The gist of the present invention is as follows.
[1] A method for producing a resin dispersion liquid containing at least water and a water-insoluble resin,
   the method including steps [b] and [c] described below,
   wherein a mixture obtained after completion of step [b] has a viscosity of 4.0 × 10⁵ mPa·s or less, and a content ratio (mass ratio) of water to the water-insoluble resin in the mixture is 2.0 or less:
      step [b]: a first addition step of adding and mixing water with the water-insoluble resin which is in a liquid state at 73°C or lower under atmospheric pressure, and
      step [c]: a second addition step of adding and mixing water with a mixture obtained in step [b].
[2] The method for producing a resin dispersion liquid according to [1], the method including step [a] described below before step [b]:
   step [a]: a melting step of melting the water-insoluble resin.
[3] The method for producing a resin dispersion liquid according to [1] or [2], wherein a content of a surfactant in the resin dispersion liquid is 0.1 mass% or less relative to the total mass of the resin dispersion liquid.
[4] The method for producing a resin dispersion liquid according to any of [1] to [3], wherein a content of an organic solvent in the resin dispersion liquid is 1 mass% or less relative to the total mass of the resin dispersion liquid.
[5] The method for producing a resin dispersion liquid according to any of [1] to [4], wherein the water-insoluble resin includes a hydrophilic structure and a hydrophobic structure.
[6] The method for producing a resin dispersion liquid according to [5], wherein the hydrophilic structure is a structure derived from a polyalkylene glycol.
[7] The method for producing a resin dispersion liquid according to any of [1] to [6], wherein, in step [b], the water-insoluble resin is in a liquid state at 69°C or lower.
[8] The method for producing a resin dispersion liquid according to any of [1] to [7], wherein the viscosity of the mixture after completion of step [b] is 1.0 × 10⁵ mPa·s or less.
[9] The method for producing a resin dispersion liquid according to any of [1] to [8], wherein the content ratio (mass ratio) of water to the water-insoluble resin in the mixture after completion of step [b] is 1.5 or less.
[10] The method for producing a resin dispersion liquid according to any of [1] to [9], the method further including step [d] of adding an additive.
[11] The method for producing a resin dispersion liquid according to [10], wherein the additive added in step [d] is encapsulated in particles of the water-insoluble resin in the resin dispersion liquid.
[12] The method for producing a resin dispersion liquid according to [10] or [11], wherein the additive contains any one or more selected from a polymerization initiator, a sensitizer, and a polymerizable monomer.

### Advantageous Effects of Invention

According to the present invention, even under mild conditions, it is possible to produce a resin dispersion liquid which contains few coarse particles and in which a water-insoluble resin is well dispersed.

The resin dispersion liquid produced by the present invention, in which the water-insoluble resin is well dispersed, can be suitably used as a raw material for inkjet ink.

### Description of Embodiments

Hereinafter, an embodiment of the present invention will be described. The present invention is not limited to this embodiment.

In the present invention, when expressed as "X to Y" (X and Y are any numerals), unless otherwise specified, this expression is intended to mean "X or more and Y or less" and also encompasses the meanings "preferably more than X" and "preferably less than Y."

In the present invention, when expressed as "X or more" (X is any numeral) or "Y or less" (Y is any numeral), the expression also encompasses the meaning "preferably more than X" or "preferably less than Y," respectively.

### Method for Producing Resin Dispersion Liquid

The method for producing a resin dispersion liquid of the present invention is a method for producing a resin dispersion liquid containing at least water and a water-insoluble resin, the method including steps [b] and [c] described below, wherein a mixture obtained after completion of step [b] has a viscosity of 4.0 × 10⁵ mPa·s or less, and the content ratio (mass ratio) of water to the water-insoluble resin in the mixture is 2.0 or less.
Step [b]: a first addition step of adding and mixing water with the water-insoluble resin which is in a liquid state at 73°C or lower under atmospheric pressure
Step [c]: a second addition step of adding and mixing water with the mixture obtained in step [b]

In the present invention, the water to be added in step [b] and step [c] may be any of tap water, desalted water, and ultrapure water. Among these, desalted water (ion-exchanged water) is preferable as the water to be added from the viewpoints of both ease of availability and high purity.

As long as the method for producing a resin dispersion liquid of the present invention includes at least two water addition and mixing steps [b] and [c], other treatments or steps may be additionally performed as desired. For example, in addition to steps [a] and [d] described below, the method may further include a filtration step of filtering the produced resin dispersion liquid.

In the present invention, the term "step" may refer to a step performed in a production line or a step performed outside a production line. In addition, processing in one step may be performed intermittently. In such a case, the processing may be performed intermittently with intervals of time, using different apparatuses, or at different locations. The step may also be performed in the same production line together with another step. That is, a plurality of steps may be performed using the same apparatus.

With the method for producing a resin dispersion liquid of the present invention, even under mild conditions, a resin dispersion liquid which has few coarse particles and in which the water-insoluble resin is well dispersed can be produced. Although the mechanism by which such effects are achieved is not clear, it is presumed as follows.

By adding water in portions while maintaining the temperature of the water-insoluble resin at 73°C or lower, the process passes through a co-continuous phase in which the water-insoluble resin and water mutually form continuous phases. Further, it is presumed that, by adding water stepwise while the co-continuous phase is formed, the water-insoluble resin phase in the co-continuous phase is uniformly cleaved by the water so that the particle size is appropriately reduced, thereby providing a resin dispersion liquid in which no coarse particles are intermixed.

### Step [a]

The method for producing a resin dispersion liquid of the present invention may further include step [a]. In step [a], the water-insoluble resin is melted. Step [a] is preferably provided before step [b] described below.

The means or apparatus for melting the water-insoluble resin is not particularly limited, and examples thereof include an oven, a band heater, a hot plate, a water bath, an oil bath, and a jacketed reaction vessel.

The temperature for melting the water-insoluble resin is preferably 73°C or lower, more preferably 71°C or lower, and still more preferably 69°C or lower. Meanwhile, this temperature is preferably 50°C or higher, more preferably 60°C or higher, and still more preferably 65°C or higher. When the temperature is within the above range, the viscosity of the mixture obtained in step [b] can be kept low, and aggregation of the water-insoluble resin at high temperature can be suppressed. In addition, production safety is improved.

Step [a] may be performed with stirring. Preferred stirring means, stirring apparatus, and rotational speed during stirring are the same as those in step [b] described below.

### Step [b]

Step [b] is a first addition step of adding and mixing water with the water-insoluble resin which is in a liquid state at 73°C or lower under atmospheric pressure.

The water-insoluble resin may be used as one that is in a liquid state in advance, or may be used by bringing a resin that has been in a solid state in advance into a liquid state by melting at 73°C or lower.

Here, the term "liquid state" means a state in which the water-insoluble resin has fluidity. The term "solid state" means a state in which the water-insoluble resin does not exhibit fluidity and can maintain its shape.

In step [b], the suitable temperature of the water-insoluble resin in a liquid state is generally 5°C or higher, preferably 10°C or higher, and more preferably 20°C or higher. Meanwhile, the upper limit of this temperature is 73°C or lower, preferably 71°C or lower, and more preferably 69°C or lower.

When the method for producing a resin dispersion liquid of the present invention includes step [a], the suitable temperature of the water-insoluble resin in a liquid state is the same as the melting temperature range of the water-insoluble resin in step [a] described above.

The means or apparatus for adding water is not particularly limited. Examples thereof include a burette, a dropper, and a pump. Among these, a pump is preferable from the viewpoint of industrialization.

The rate of adding water is preferably 100 g/min or more from the viewpoints of work efficiency and suppressing formation of a composition having undesirably high viscosity. Meanwhile, the upper limit of the rate of adding water is not particularly limited, and may be appropriately determined according to the performance of the equipment used to produce the resin dispersion liquid.

In step [b], the total amount of water to be added may be added all at once, or may be added continuously or in portions at the above addition rate.

The stirring means or stirring apparatus for mixing is not particularly limited. Examples thereof include stirring blades such as paddle-type, helical-type, anchor-type, turbine-type, and half-moon-type blades, a pencil mixer, and a homogenizer. Among these, a half-moon-type or helical-type stirring blade is preferable because it is easy to provide.

The rotational speed during stirring is preferably 500 rpm or less, and more preferably 300 rpm or less. When the rotational speed is at or below the above upper limit, no special equipment is required, scale-up is easy, and production safety is also improved. Meanwhile, the lower limit of the rotational speed is not particularly limited, and an appropriate rotational speed may be selected, depending on the stirring method and the size of the vessel to be stirred, so that the water-insoluble resin and the water are sufficiently mixed.

In step [b], addition of water to the water-insoluble resin and mixing thereof are performed under atmospheric pressure (0.1 MPa). By performing step [b] under atmospheric pressure, no special equipment such as vacuum equipment or high-pressure equipment is required, scale-up is easy, and production safety is also improved.

In the present invention, the phrase "under atmospheric pressure" encompasses a range of 0.1 MPa - 0.02 Pa to 0.1 MPa + 0.02 Pa.

In the present invention, pressure conditions in steps other than step [b], i.e., step [a] and steps [c] and [d] described below are not particularly limited; however, as in step [b], these steps are preferably performed under atmospheric pressure.

The viscosity of the system after completion of step [b] (wherein the "system" refers to the mixture obtained in step [b] by adding water to the water-insoluble resin and mixing them) is 4.0 × 10⁵ mPa·s or less. By setting the viscosity to at or below the above upper limit, the mixture of the water-insoluble resin and water formed during step [b] is more readily uniformly dispersed in the water added in the subsequent step [c]. The viscosity is preferably 1.0 × 10⁵ mPa·s or less, and more preferably 5.0 × 10⁴ mPa·s or less. Meanwhile, from the viewpoint of forming a co-continuous phase, the viscosity is preferably 1.0 × 10³ mPa·s or more, and more preferably 1.0 × 10⁴ mPa·s or more.

The method for measuring the viscosity of the system is as described in the Examples section below.

The content ratio (mass ratio) of water to the water-insoluble resin in the system after completion of step [b] is 2.0 or less. By setting the content ratio to at or below the above upper limit, the water-insoluble resin and water form a co-continuous phase. The content ratio is preferably 1.75 or less, and more preferably 1.5 or less. Meanwhile, the content ratio is preferably 0.5 or more, and more preferably 0.7 or more.

Step [b] is preferably carried out under temperature conditions that maintain the melting temperature of the water-insoluble resin in the liquid state described above. For this purpose, the water to be added may be heated.

### Step [c]

Step [c] is a second addition step of adding and mixing water with the mixture obtained in step [b].

Since the method for producing a resin dispersion liquid of the present invention includes step [b] and step [c], the step of adding water and mixing is substantially repeated at least twice. Thus, the process passes through a co-continuous phase in which the water-insoluble resin and water mutually form continuous phases, thereby enabling a resin dispersion liquid having few coarse particles to be produced.

From the viewpoint of producing a resin dispersion liquid having fewer coarse particles, step [c] is preferably repeated two or more times, and more preferably repeated three or more times. The upper limit of the number of repetitions of step [c] is not particularly limited; however, from the viewpoint of production efficiency, the number of repetitions is preferably 10 or less.

The amount of water added in step [c] varies depending on the intended use of the resulting resin dispersion liquid; however, the amount is preferably such that the content ratio (mass ratio) of water to the water-insoluble resin in the mixture (resin dispersion liquid) obtained after completion of step [c] is 1.5 or more. This content ratio is more preferably 2.0 or more, still more preferably 2.5 or more, and particularly preferably 3.0 or more. Meanwhile, the content ratio is preferably 9.0 or less, more preferably 7.0 or less, still more preferably 6.0 or less, and particularly preferably 5.0 or less.

The amount of water added in step [c] is preferably such that the solid content concentration of the resin dispersion liquid of the present invention obtained through step [c] becomes a preferred solid content concentration described below.

When the content ratio is at or above the above lower limit, storage stability of the resin dispersion liquid is improved. When the content ratio is at or below the above upper limit, formulation design becomes easier when various additives are added to the resin dispersion liquid of the present invention to prepare an ink or the like.

When step [c] is performed a plurality of times, it is preferable that the amount of water added be an amount obtained by dividing the amount of water to achieve the above content ratio by the number of repetitions of step [c]. However, the amount of water added may be varied from one repetition to another; for example, a larger amount may be added in earlier stages and a smaller amount in later stages.

The stirring apparatus and conditions used for addition and mixing of water in step [c] are the same as those in step [b] described above.

The temperature condition at the end of step [c] may be slightly lower than the temperature condition in step [b], for example, lower by about 2 to 10°C.

### Step [d]

The method for producing a resin dispersion liquid of the present invention may further include step [d] of adding an additive.

The additive to be added is not particularly limited. Examples of the additive include additives described below, preferably any one or more selected from the polymerization initiators, sensitizers, and polymerizable monomers described below. One type of additive may be added, or two or more types of additives may be added.

For addition of the additive, the entire amount to be added may be added all at once, or may be added in divided portions several times. When the additive is added in portions, the number of divisions is not particularly limited.

The additive added in step [d] is preferably encapsulated in particles of the water-insoluble resin in the resin dispersion liquid. For example, the additive can be encapsulated in particles of the water-insoluble resin by employing a method in which the water-insoluble resin in a liquid state is mixed with the additive and then step [b] is performed, or a method in which the additive is mixed between multiple repetitions of step [c].

That is, step [d] of adding the additive may be carried out by adding the additive to the water-insoluble resin in a liquid state during step [a] or after step [a]; may be carried out by adding the additive to the mixture of the water-insoluble resin and water during step [b]; or may be carried out during step [c].

### Resin Dispersion Liquid

The resin dispersion liquid produced by the method for producing a resin dispersion liquid of the present invention (hereinafter, also referred to as "the resin dispersion liquid of the present invention") is suitably used as a material for latex inks, but is not limited thereto. The resin dispersion liquid of the present invention can also be used for, for example, toners, adhesives, coating materials, and the like.

In the resin dispersion liquid of the present invention, the water-insoluble resin is preferably present in the form of particles.

The intensity-average particle size of the water-insoluble resin particles in the resin dispersion liquid is preferably 1 µm or less. When the intensity-average particle size is at or below the above upper limit, dischargeability is favorable when an ink containing the resin dispersion liquid is ejected from an inkjet printer, which is preferable.

The intensity-average particle size can be measured with, for example, a particle size analyzer based on dynamic light scattering.

An ink can be prepared by adding a colorant described below to the resin dispersion liquid of the present invention. The colorant to be added may have one color or two or more colors. By optionally adding colorants of two or more colors, the color of the ink can be adjusted to a desired color.

The method for preparing the resin dispersion liquid of the present invention into an ink is not particularly limited; however, for example, there is a method in which the resin dispersion liquid and a dispersion liquid in which a colorant such as a pigment is dispersed in an aqueous medium (hereinafter, also referred to as a "colorant dispersion liquid") are separately prepared, and then the resin dispersion liquid is mixed with other additives and an organic solvent and the colorant dispersion liquid. A colorant dispersion liquid can be prepared by adding a colorant such as a pigment to a solvent such as water and then mixing.

Here, from the viewpoint of facilitating formulation design when an ink is prepared, the solid content concentration, which is the concentration of components other than the solvent in the resin dispersion liquid of the present invention, is preferably 5 mass% or more, more preferably 10 mass% or more, and particularly preferably 15 mass% or more. The upper limit of the solid content concentration is not particularly limited; however, from the viewpoint of improving storage stability of the resin dispersion liquid, it is preferably 35 mass% or less, and particularly preferably 30 mass% or less.

The colorant concentration (e.g., pigment concentration) in the colorant dispersion liquid is preferably 5 mass% or more and more preferably 10 mass% or more from the viewpoints of handleability and storage stability, while it is preferably 40 mass% or less and more preferably 35 mass% or less. As the colorant dispersion liquid, a commercially available product may be used as is.

The viscosity of an ink produced from the resin dispersion liquid of the present invention can be adjusted as desired according to the intended use and manner of use. When the ink is used in an inkjet printer, the viscosity at 25°C is preferably 25 mPa·s or less, more preferably 20 mPa·s or less, and still more preferably 15 mPa·s or less. The lower limit of the ink viscosity is not particularly limited; however, it is preferably 1 mPa·s or more and more preferably 2 mPa·s or more.

### Water-Insoluble Resin

In the present invention, a water-insoluble resin is used. One type of the water-insoluble resin may be used alone, or two or more types having different resin compositions or physical properties may be used in combination.

Herein, the term "water-insoluble resin" is defined as follows.

1 g of the resin is added to 50 g of desalted water. The mixture was stirred with a magnetic stirrer at 300 rpm for 10 minutes. After completion of stirring, when any undissolved residue of the resin can be visually confirmed, the resin is "water-insoluble." When no undissolved residue of the resin can be visually confirmed, the particle size distribution of the resulting aqueous solution or aqueous dispersion is measured with a particle size distribution analyzer (e.g., NANOTRAC WAVE II, available from MicrotracBEL Corp.). When a distribution is observed in a region of particle sizes of 10 nm or more, the resin is determined to be "water-insoluble," and when no such distribution is observed, the resin is determined not to be "water-insoluble."

The term "resin" as used herein refers to an oligomer or polymer having a structure in which a plurality of constituent units are bonded, and does not include so-called monomers.

The water-insoluble resin used in the present invention is a resin that becomes liquid at a temperature of 73°C or lower. From the viewpoint of workability, the water-insoluble resin used in the present invention is preferably in a liquid state at the suitable temperature of the water-insoluble resin in step [b].

The ionic character of the water-insoluble resin used in the present invention is not particularly limited, but it is preferably nonionic. Here, "nonionic" means, for example, that the resin is composed of ether bonds or hydroxyl groups that do not dissociate into ions in water. Meanwhile, "ionic" (anionic, cationic, or amphoteric) means, for example, that the resin has carboxyl groups or amino groups that can dissociate into ions in water. More specifically, examples of anionic resins include resins containing carboxyl groups.

The water-insoluble resin is also preferably a resin that includes a hydrophilic structure and a hydrophobic structure. A water-insoluble resin including a hydrophilic structure and a hydrophobic structure is excellent in dispersion stability in the resin dispersion liquid.

Here, examples of the hydrophilic structure include structures derived from a compound (C') described below. The hydrophilic structure is particularly preferably a structure derived from a polyalkylene glycol, which provides excellent dispersibility in water.

The type of the water-insoluble resin is not particularly limited, and examples thereof include known water-insoluble oligomers or polymers. More specific examples thereof include urethane resins, ester resins, acrylic resins, and resins obtained by modifying these resins with a hydrophilic moiety. Among these, a urethane resin modified with polyoxyalkylene is readily dispersible in water and can be suitably used.

The water-insoluble resin preferably further contains a polymerizable group. When the water-insoluble resin contains a polymerizable group, the degree of curing of an ink coating film can be improved by polymerizing the polymerizable group in the ink coating film when the resin dispersion liquid is converted into an ink.

Examples of such a polymerizable group include a (meth)acryloyl group, a vinyl group, and a vinyl ether group. Among these, a (meth)acryloyl group is preferable from the viewpoint of ease of radical polymerization.

In the present invention, the term "(meth)acrylate" means acrylate or methacrylate. The same applies to the term "(meth)acryloyl".

The number of polymerizable groups per molecule of the resin is preferably two or more, more preferably three or more, while being preferably 15 or less.

From the viewpoint of allowing the water-insoluble resin to be present in the form of particles in water, the water-insoluble resin is preferably a UV-curable oligomer or polymer, and more preferably a UV-curable oligomer.

Examples of UV-curable oligomers that are modified with a hydrophilic moiety as described above and that contain a polymerizable group include compounds produced by reacting a polyisocyanate compound (A) described below with the following compound (B') and the following compound (C'). However, the present invention is not limited to the following examples.
Compound (B'): a compound that contains a polymerizable unsaturated bond and can bind to the polyisocyanate compound (A)
Compound (C'): a water-soluble compound that can bind to the polyisocyanate compound (A)

The compound produced by reacting the polyisocyanate compound (A), the compound (B'), and the compound (C') will be described in more detail below.

Examples of the structure of the compound (B') capable of binding to the polyisocyanate compound (A) include a hydroxyl group, a carboxyl group, and an amino group. Examples of polymerizable unsaturated bonds include a carbon-carbon double bond and a carbon-carbon triple bond. Among them, a carbon-carbon double bond is preferable. More specific examples thereof include a carbon-carbon double bond derived from a vinyl group, a (meth)acryloyl group, or the like.

The water-soluble compound in the compound (C') includes a water-soluble polymer. Specific examples of the water-soluble compound in the compound (C') include polyglycerin, polyhydroxy (meth)acrylate, polyamines, quaternary-aminated polystyrene, sulfonated polystyrene, polyethers, and polyalkylene glycols. Among these, polyglycerin, polyhydroxy (meth)acrylate, and a polyalkylene glycol are preferable, and a polyalkylene glycol is particularly preferable. Each of these water-soluble compounds may be a copolymer.

The compound (C') has a structure of such a water-soluble compound and a structure that can bind to the polyisocyanate compound (A). Here, the "structure that can bind to the polyisocyanate compound (A)" is the same as that of the above-mentioned compound (B').

The polyisocyanate compound (A), the compound (B'), and the compound (C') may additionally have other structures.

The weight average molecular weight of the water-insoluble resin calibrated with polystyrene as determined by gel permeation chromatography (GPC) is preferably 500 or more, more preferably 1000 or more, from the viewpoint of dispersing the resin in the form of particles rather than in a dissolved state in water. From the viewpoint of allowing the resin to be stably present in the form of particles, the weight average molecular weight of the water-insoluble resin is preferably 100000 or less, more preferably 50000 or less.

### Solvent

The resin dispersion liquid of the present invention may contain a solvent other than water, but is preferably substantially free of such a solvent. That is, the resin dispersion liquid of the present invention is preferably substantially free of an organic solvent. By being substantially free of an organic solvent, the production method provides improved safety for the human body and improved environmental compatibility.

Here, "substantially free of a solvent other than water (organic solvent)" means that the content of a solvent other than water (organic solvent) is 1 mass% or less relative to the total mass of the resin dispersion liquid of the present invention. That is, the content of the organic solvent in the resin dispersion liquid of the present invention is preferably 1 mass% or less, more preferably 0.5 mass% or less, relative to the total mass of the resin dispersion liquid.

### Additive

The resin dispersion liquid of the present invention may contain an additive.

When an additive is contained, the additive may exist alone in the resin dispersion liquid, or the additive may be encapsulated in particles of the water-insoluble resin in the resin dispersion liquid (hereinafter, also referred to as "resin particles"). From the viewpoint of preventing aggregation of the resin particles and the additive, the additive is preferably encapsulated in the resin particles in the resin dispersion liquid.

The additive is not particularly limited, and examples thereof include known additives such as polymerization initiators, sensitizers, polymerizable monomers, polymerizable polymers other than the water-insoluble resin, non-polymerizable polymers other than the water-insoluble resin, colorants, silica, metal particles, preservatives, antifungal agents, rust inhibitors, and surfactants.

Among these, from the viewpoint of improving curability of a coating film when the resin dispersion liquid is converted into an ink, it is preferable to add any one or more selected from polymerization initiators, sensitizers, and polymerizable monomers, and it is more preferable to add at least a polymerization initiator.

As the polymerization initiator, a polymerization initiator that generates any of a radical, a cation, and an anion by light or heat can be used. The polymerization initiator is preferably encapsulated in the resin particles in the resin dispersion liquid.

Examples of polymerization initiator that generates radicals by light include aromatic ketones, acylphosphine oxide compounds, aromatic onium salt compounds, organic peroxides, thio compounds (thioxanthone compounds, thiophenyl group-containing compounds), α-aminoalkylphenone compounds, hexaarylbiimidazole compounds, ketoxime ester compounds, borate compounds, azinium compounds, metallocene compounds, active ester compounds, compounds having a carbon-halogen bond, and alkylamine compounds.

Examples of the polymerization initiator that generates cations by light include halonium salts, sulfonium salts, phosphonium salts, and ammonium salts.

Examples of the polymerization initiator that generates radicals by heat include azo compounds, and organic peroxides.

These polymerization initiators may be used alone, or two or more types thereof may be used in combination.

When a sensitizer is added, the added sensitizer is preferably encapsulated in the resin particles in the resin dispersion liquid, and more preferably encapsulated together with the polymerization initiator and/or the polymerizable monomer.

By encapsulating the sensitizer in the resin particles together with the polymerization initiator and/or the polymerizable monomer, upon UV irradiation, the sensitizer in the system absorbs actinic radiation and enters an excited state, and, by coming into contact with the polymerization initiator, promotes decomposition of the polymerization initiator, thereby enabling a curing reaction with higher sensitivity.

Examples of the sensitizer include aliphatic amines, amines having an aromatic group, cyclic amine compounds such as piperidine, alkoxy-anthracene compounds, urea-based compounds such as o-tolylthiourea, sulfur compounds such as sodium diethylthiophosphate and soluble salts of aromatic sulfinic acids, nitrile compounds such as N,N'-disubstituted-p-aminobenzonitrile, phosphorus compounds such as tri-n-butylphosphine and sodium diethyl dithiophosphate, and nitrogen compounds such as Michler's ketone, N-nitrosohydroxylamine derivatives, oxazolidine compounds, tetrahydro-1,3-oxazine compounds, and condensates of formaldehyde or acetaldehyde and a diamine.

One type of these sensitizers may be used alone, or two or more types thereof may be used in combination.

When a polymerizable monomer is added, the added polymerizable monomer is preferably encapsulated in the resin particles in the resin dispersion liquid, and more preferably encapsulated together with the polymerization initiator and/or the sensitizer. By encapsulating the polymerizable monomer in the resin particles together with the polymerization initiator and/or the sensitizer, further improvement in curability of the coating film when the resin dispersion liquid is converted into an ink can be expected.

Examples of the polymerizable monomer include a radically polymerizable monomer. The radically polymerizable monomer is not particularly limited as long as it has one or more radically polymerizable groups in the molecule. The number of radically polymerizable groups in the molecule is preferably 2 or more and more preferably 3 or more, and is preferably 15 or less.

Examples of the radically polymerizable group of such a radically polymerizable monomer include a (meth)acryloyl group, a vinyl group, and a vinyl ether group. Among these, a (meth)acryloyl group is preferable from the viewpoint of ease of radical polymerization.

One type of radically polymerizable monomer may be used alone, or two or more types thereof may be used in combination.

The polymerizable or non-polymerizable polymer as an additive is a polymer other than the above-described water-insoluble resin, and is a polymer that is solid at 73°C, or water-soluble, or has both of these characteristics.

When a polymerizable or non-polymerizable polymer is added, the added polymerizable or non-polymerizable polymer is preferably encapsulated in the resin particles in the resin dispersion liquid.

The polymerizable or non-polymerizable polymer is not particularly limited, and examples thereof include polyvinyl alcohol resins, polyalkylene glycol resins, olefin resins, acrylic resins, methacrylic resins, vinyl chloride resins, polycarbonate resins, polyester resins, polyamide resins, polyacetal resins, polystyrene resins, polyvinyl acetate resins, polyurethane resins, and polytetrafluoroethylene resins.

When two or more polymerizable or non-polymerizable polymers among these are used, the polymers may form core-shell type particles in which one is encapsulated in particles formed by the other, or may form particles having a sea-island structure in which one is distributed in an island-like manner within particles formed by the other.

When the resin dispersion liquid of the present invention contains a surfactant, any of silicone-based surfactants, fluorine-based surfactants, amphoteric surfactants, nonionic surfactants, and anionic surfactants may be used as the surfactant.

When a surfactant is contained, the surfactant may be present alone in the resin dispersion liquid, or may be encapsulated in the resin particles in the resin dispersion liquid.

The above-described water-insoluble resin is not included in the surfactant.

However, among the additives, with respect to surfactants, the resin dispersion liquid of the present invention is preferably substantially free of a surfactant.

Here, "substantially free of a surfactant" means that the surfactant content is 0.1 mass% or less relative to the total mass of the resin dispersion liquid. That is, the surfactant content in the resin dispersion liquid of the present invention is preferably 0.1 mass% or less, more preferably 0.05 mass% or less, relative to the total mass of the resin dispersion liquid.

By the resin dispersion liquid of the present invention being substantially free of a surfactant, the production method provides improved human safety, environmental compatibility, and simplicity.

The content of an additive encapsulated in the resin particles in the resin dispersion liquid relative to the entire resin dispersion liquid is preferably 5 mass% or less, more preferably 3 mass% or less, and still more preferably 1 mass% or less. When the content of the additive encapsulated in the resin particles is at or below the above upper limit, it is possible to prevent the encapsulated additive from leaking out of the resin particles over time and thereby lowering storage stability.

The content of the additive relative to the water-insoluble resin in the resin dispersion liquid of the present invention is preferably 20 mass% or less, more preferably 10 mass% or less, and still more preferably 5 mass% or less.

### Application

The resin dispersion liquid of the present invention can be suitably used mainly as a material for inks, particularly inks for printing with inkjet printers.

An ink produced from the resin dispersion liquid of the present invention is an aqueous ink and thus is excellent in terms of environmental compatibility and safety. Further, while satisfying required performance in a well-balanced manner, the resulting cured product and printed matter are also excellent in water resistance and solvent resistance.

When the resin dispersion liquid of the present invention is used as an ink, because it can print, with high productivity, images having excellent image quality and cured-film properties on various substrates, it can be used for various applications such as posters, road signs, sign boards, billboards, various outdoor and indoor display boards, building materials (surface materials for exteriors, interiors, walls, floors, ceilings, windows, and the like), exteriors of vehicles and the like (automobiles, railway vehicles, aircraft, and the like), surface materials for furniture and office automation equipment and the like, printed paper products, textiles, and the like. Examples

Examples of the present invention will be described below. However, the present invention is not limited to these Examples.

### Preparation of Water-Insoluble Resin 1

Water-insoluble resin 1 (nonionic UV-curable oligomer; weight average molecular weight: 2200) was produced by reacting 0.4 mol of hexamethylene diisocyanate trimer, 0.8 mol of dipentaerythritol pentaacrylate, and 0.4 mol of polyethylene glycol monoallyl ether.

The water-insoluble resin 1 is in a liquid state at 39°C.

### Preparation of Resin Dispersion Liquid 1

Step [a]: 1 part by mass of the water-insoluble resin 1 produced above and 0.01 parts by mass of GENOPOL Tx-2 (available from RAHN) as a polymerization initiator were stirred and mixed in a jacketed stirring tank equipped with a stirring blade at 68°C at a rotational speed of 50 rpm.

Step [b]: Next, 0.84 parts by mass of ion-exchanged water at 60°C was added under stirring at a rotational speed of 200 rpm while the stirred tank was maintained at 68°C (addition rate: about 200 to 350 g/min), and mixing was continued for 2 hours.

Step [c]: Thereafter, while the temperature was lowered to 63°C, 0.84 parts by mass of ion-exchanged water at 60°C was added in four portions under stirring at a rotational speed of 200 rpm (total amount added: 3.36 parts by mass, addition rate: about 200 to 350 g/min). Thereafter, the mixture was filtered through a polypropylene-made mesh having an opening size of 106 µm to prepare a resin dispersion liquid 1.

Steps [a] to [c] above were all performed under atmospheric pressure.

### Preparation of Resin Dispersion Liquids 2 to 9

Resin dispersion liquids 2 to 9 were prepared in the same manner as in the resin dispersion liquid 1, except that the temperature condition in step [a] (which is equal to the temperature condition in step [b]), the temperature condition at the end of step [c], the number of repetitions of step [c], the viscosity of the system after completion of step [b], and the content ratio (mass ratio) of water to the water-insoluble resin in the system (described in Table 1 as "water/water-insoluble resin ratio") were changed as shown in Table 1.

In each case, the amount of water added was adjusted so that the total amount of water added in step [b] and step [c] was 4.2 parts by mass.

The viscosity of the system after completion of step [b] was measured as follows.

### Viscosity of System at End of Step [b]

As a sample for viscosity measurement, a separate sample reproducing the mixed mass ratio of the water-insoluble resin 1, the polymerization initiator (Tx-2), and water in the system at the end of step [b] was prepared and used as a measurement sample. Because the viscosity of the system at the end of step [b] depends on the mixed mass ratio in the system and the temperature of the system, the viscosity of the measurement sample at a predetermined temperature corresponds to the viscosity of the system at the end of step [b].

### Measurement of Measurement Sample 1

### Reproduction of Resin Dispersion Liquids 1, 3, 6, and 8

A mixture of the water-insoluble resin 1, the polymerization initiator (Tx-2), and water (water-insoluble resin:Tx-2:water = 1:0.01:0.84 (mass ratio)) was mixed at 68°C under stirring, stirring was continued for 2 hours, and then the mixture was cooled to room temperature (25°C).

### Measurement of Measurement Sample 2

### Reproduction of Resin Dispersion Liquids 2 and 5

A mixture of the water-insoluble resin 1 and water (water-insoluble resin:water = 1:0.84 (mass ratio)) was mixed at 68°C under stirring, stirring was continued for 2 hours, and then the mixture was cooled to room temperature (25°C).

### Measurement of Measurement Sample 3

### Reproduction of Resin Dispersion Liquid 4

A mixture of the water-insoluble resin 1, the polymerization initiator (Tx-2), and water (water-insoluble resin:Tx-2:water = 1:0.01:1.4 (mass ratio)) was mixed at 68°C under stirring, stirring was continued for 2 hours, and then the mixture was cooled to room temperature (25°C).

### Measurement of Measurement Sample 4

### Reproduction of Resin Dispersion Liquid 7

A mixture of the water-insoluble resin 1, the polymerization initiator (Tx-2), and water (water-insoluble resin:Tx-2:water = 1:0.01:4.2 (mass ratio)) was mixed at 68°C under stirring, stirring was continued for 2 hours, and then the mixture was cooled to room temperature (25°C).

### Measurement of Measurement Sample 5

### Reproduction of Resin Dispersion Liquid 9

A mixture of the water-insoluble resin 1, the polymerization initiator (Tx-2), and water (water-insoluble resin:Tx-2:water = 1:0.01:2.1 (mass ratio)) was mixed at 68°C under stirring, stirring was continued for 2 hours, and then the mixture was cooled to room temperature (25°C).

For the above measurement samples, the viscosity was measured using a rheometer (MCR302, available from Anton Paar) with a 25 mm-diameter parallel plate serving as a jig at a measurement gap of 0.5 mm and a shear rate of 0.1/s. The viscosity was measured with heating at a rate of 2°C/min to yield a temperature-sweep viscosity plot, and the viscosity at the temperature at which water was added in step [b] was calculated.

For the measurement samples 4 and 5, the system was not uniform and thus the viscosity failed to be measured.

### Examples 1 to 4 and Comparative Examples 1 to 5

For the prepared resin dispersion liquids 1 to 9, the presence or absence of water-insoluble resin residue during mesh filtration (described in Table 1 as "presence/absence of water-insoluble resin residue"), particle size distribution, and turbidity were evaluated as follows. The evaluation results are shown in Table 1.

### Presence or Absence of Water-Insoluble Resin Residue at Time of Mesh Filtration

Each of the prepared resin dispersion liquids 1 to 9 was filtered through a mesh having an opening size of 106 µm, and the presence or absence of a water-insoluble resin residue was visually confirmed.
○ (good): No residue.
× (poor): Presence of residue.

### Particle Size Distribution

The particle size distribution of each of the prepared resin dispersion liquids 1 to 9 was measured.

Measurement was performed using a zeta potential/particle size/molecular weight measurement system (ELSZ-2000ZS, available from Otsuka Electronics Co., Ltd.) after fourfold dilution of each resin dispersion liquid. As described below, it was confirmed whether a particle size distribution was observed in a region where the particle size exceeds 1 µm.
○ (good): No particle size distribution was observed in a region where the particle size exceeds 1 µm.
× (poor): A particle size distribution was observed in a region where the particle size exceeds 1 µm.

### Turbidity

The turbidity of each of the prepared resin dispersion liquids 1 to 9 was measured.

A turbidity meter (HI 93703, available from Hanna Instruments) was used for measurement, and turbidity measurement values were evaluated according to the following criteria. In the present invention, S or A was regarded as passing, and B or C was regarded as failing.

By turbidity measurement, it is possible to compare conditions such as the number and size of coarse particles that are visually recognizable. When the turbidity is less than 200, preferably less than 100, it can be confirmed that the particle size has been appropriately reduced and that a dispersion liquid having little contamination with coarse particles has been produced.
S: Turbidity of less than 100
A: Turbidity of 100 or more and less than 200
B: Turbidity of 200 or more and less than 400
C: Turbidity of 400 or more

**[Table 1]**

| | Resin dispersion liquid number | Polymerization initiator in Step [a] (parts by mass) | Temperature in step [a] (°C) | Temperature at end of step [c] (°C) | Number of repetitions of step [c] | Viscosity of system after completion of step [b] (mPa·s) | Water/water-insoluble resin ratio in system after completion of step [b] (mass ratio) | Evaluation results of resin dispersion liquid | | |
|---|---|---|---|---|---|---|---|---|---|---|
| | | | | | | | | Presence/ absence of water-insoluble resin residue | Particle size distribution | Turbidity |
| Example 1 | 1 | Tx-2 (0.01) | 68 | 63 | 4 | 3.4 × 10⁴ | 0.84 | ○ | ○ | S |
| Example 2 | 2 | None | 68 | 63 | 4 | 3.6 × 10⁴ | 0.84 | ○ | ○ | S |
| Example 3 | 3 | Tx-2 (0.01) | 70 | 70 | 4 | 1.7 × 10⁴ | 0.84 | ○ | ○ | A |
| Example 4 | 4 | Tx-2 (0.01) | 68 | 63 | 2 | 3.4 × 10⁴ | 1.4 | ○ | ○ | A |
| Comparative Example 1 | 5 | None | 60 | 60 | 4 | 5.3 × 10⁵ | 0.84 | × | × | B |
| Comparative Example 2 | 6 | Tx-2 (0.01) | 45 | 45 | 4 | 2.6 × 10⁶ | 0.84 | × | × | B |
| Comparative Example 3 | 7 | Tx-2 (0.01) | 60 | 60 | 0 | Not measurable | 4.2 | ○ | × | B |
| Comparative Example 4 | 8 | Tx-2 (0.01) | 75 | 75 | 4 | 3.5 × 10³ | 0.84 | ○ | × | C |
| Comparative Example 5 | 9 | Tx-2 (0.01) | 68 | 63 | 1 | Not measurable | 2.1 | ○ | × | B |

The following can be seen from Table 1.

When the process includes two or more water addition and mixing steps, i.e., a first addition step [b] of adding and mixing water with the water-insoluble resin in a liquid state at 73°C or lower under atmospheric pressure, and a second addition step [c] of adding and mixing water with the mixture obtained in step [b]; and when the viscosity of the system after completion of step [b] is 4.0 × 10⁵ mPa·s or less and the content ratio (mass ratio) of water to the water-insoluble resin in the system is 2.0 or less, after completion of production, a resin dispersion liquid can be obtained in which the particle size is appropriately reduced and the amount of coarse particles is small.

In contrast, in the resin dispersion liquids of the Comparative Examples that fail to satisfy any of the above conditions, any of water-insoluble resin residue, turbidity, and particle size distribution is inferior, and a resin dispersion liquid having an appropriately small particle size and containing few coarse particles cannot be obtained.

Although the present invention has been described in detail with reference to specific embodiments, it will be apparent to those skilled in the art that various modifications can be made without departing from the spirit and scope of the present invention.

This application is based on Japanese Patent Application No. 2023-193089 filed on November 13, 2023, the entire content of which is incorporated herein by reference.

## Claims

1. A method for producing a resin dispersion liquid containing at least water and a water-insoluble resin,
the method comprising steps [b] and [c] described below,
wherein a mixture obtained after completion of step [b] has a viscosity of 4.0 × 10⁵ mPa·s or less, and a content ratio (mass ratio) of water to the water-insoluble resin in the mixture is 2.0 or less:
step [b]: a first addition step of adding and mixing water with the water-insoluble resin which is in a liquid state at 73°C or lower under atmospheric pressure; and
step [c]: a second addition step of adding and mixing water with a mixture obtained in step [b].

2. The method for producing a resin dispersion liquid according to claim 1, the method comprising step [a] described below before step [b]:
step [a]: a melting step of melting the water-insoluble resin.

3. The method for producing a resin dispersion liquid according to claim 1 or 2, wherein a content of a surfactant in the resin dispersion liquid is 0.1 mass% or less relative to the total mass of the resin dispersion liquid.

4. The method for producing a resin dispersion liquid according to claim 1 or 2, wherein a content of an organic solvent in the resin dispersion liquid is 1 mass% or less relative to the total mass of the resin dispersion liquid.

5. The method for producing a resin dispersion liquid according to claim 1 or 2, wherein the water-insoluble resin includes a hydrophilic structure and a hydrophobic structure.

6. The method for producing a resin dispersion liquid according to claim 5, wherein the hydrophilic structure is a structure derived from a polyalkylene glycol.

7. The method for producing a resin dispersion liquid according to claim 1 or 2, wherein, in step [b], the water-insoluble resin is in a liquid state at 69°C or lower.

8. The method for producing a resin dispersion liquid according to claim 1 or 2, wherein the viscosity of the mixture after completion of step [b] is 1.0 × 10⁵ mPa·s or less.

9. The method for producing a resin dispersion liquid according to claim 1 or 2, wherein the content ratio (mass ratio) of water to the water-insoluble resin in the mixture after completion of step [b] is 1.5 or less.

10. The method for producing a resin dispersion liquid according to claim 1 or 2, the method further comprising step [d] of adding an additive.

11. The method for producing a resin dispersion liquid according to claim 10, wherein the additive added in step [d] is encapsulated in particles of the water-insoluble resin in the resin dispersion liquid.

12. The method for producing a resin dispersion liquid according to claim 10, wherein the additive contains any one or more selected from a polymerization initiator, a sensitizer, and a polymerizable monomer.
